# DEMANDE DE BREVET EUROPEEN

(11) **EP 3 780 197 A1**
(43) Date de publication de la demande: **17.02.2021**
(21) Numéro de dépôt: 20190926.4
(22) Date de dépôt: 13.08.2020
(51) Int. Cl.: H01M 4/90, H01M 4/86, H01M 8/1018

(54) **PROCÉDÉ DE PRÉPARATION D'UN MATÉRIAU CARBONÉ POREUX ET AZOTÉ AVEC DOPANT MÉTALLIQUE, NOTAMMENT UTILE À TITRE DE CATALYSEUR POUR LA RÉDUCTION DE L'OXYGÈNE (ORR)**

(30) Priorité: 14.08.2019 FR 1909219
(71) Demandeur: Commissariat à l'Energie Atomique et aux Energies Alternatives, 75015 Paris (FR)
(72) Inventeur: ROIRON, Camille, 38054 GRENOBLE CEDEX 9 (FR); CELLE, Caroline, 38054 GRENOBLE CEDEX 9 (FR); HEITZMANN, Marie, 38054 GRENOBLE CEDEX 9 (FR); JACQUES, Pierre-André, 38054 GRENOBLE CEDEX 9 (FR); SIMONATO, Jean-Pierre, 38054 GRENOBLE CEDEX 9 (FR)
(74) Mandataire: Nony

(57) **Abrégé**

La présente invention vise un procédé de préparation d'un matériau carboné poreux azoté et chargé à cœur par au moins un dopant métallique comprenant au moins les étapes consistant à
(a) disposer d'un milieu solvant contenant en solution, au moins un aldéhyde, un dérivé hydroxybenzène et un composé hydrocarboné source en atomes d'azote et en outre au moins un précurseur dudit dopant métallique,
(b) activer une polymérisation sol-gel au niveau dudit milieu solvant de l'étape (a) pour former un hydrogel de carbone azoté contenant au moins à cœur dudit précurseur métallique,
(c) disposer d'une forme sèche dudit hydrogel de carbone azoté formé en étape (b) et,
(d) pyrolyser ladite forme sèche en atmosphère inerte pour former un matériau carboné poreux azoté et chargé au moins à cœur avec au moins un dopant métallique et le récupérer

## Description

### Domaine technique

La présente invention concerne un procédé de fabrication d'un matériau carboné poreux et azoté avec dopant métallique, tout particulièrement intéressant pour son efficacité catalytique sur la réduction de l'oxygène (ORR) et donc utile dans un système de pile à combustible à membrane échangeuse de protons (PEMFC).

### Technique antérieure

Les piles à combustible à membrane échangeuse de protons (PEMFC) représentent aujourd'hui des dispositifs de conversion d'énergie de grand intérêt au regard de leur efficacité en termes de conversion, de leur importante densité d'énergie et de leur faible impact sur l'environnement. Toutefois, leur mise en œuvre à grande échelle est contrariée au regard principalement de la nature des catalyseurs qui y sont utilisés. Le catalyseur de référence pour la réduction de l'oxygène (ORR) est en effet le platine sur carbone (Pt/C), soit un métal très onéreux.

Le développement de catalyseurs à base de métaux non précieux (NPMC) pour la réaction de réduction de l'oxygène (ORR) a donc suscité beaucoup d'attention ces dernières années. De nouveaux catalyseurs ont ainsi été élaborés à partir de métaux de transition et/ou d'atomes d'azote immobilisés sur un support poreux carboné.

Les gels de carbone ont été tout particulièrement retenus pour constituer ces structures carbonées au regard de leurs propriétés uniques, à savoir faible masse volumique, porosité continue et ajustable, surface spécifique élevée et bonnes conductivité et stabilité chimique. Ces gels de carbone sont classiquement obtenus par des réactions de polymérisation sol-gel entre des hydroxylbenzène et aldéhyde et carbonisation des hydrogels ainsi obtenus. Un procédé de synthèse particulier d'aérogels de carbone consiste à utiliser des matrices (par exemple de type silice, zéolithes ou certains polymères) pouvant être éliminées au cours de la carbonisation des précurseurs organiques, permettant ainsi d'obtenir des aérogels à taille de pores déterminée. Avantageusement, par le biais de conditions de synthèse, telles que la composition et le procédé de séchage de l'hydrogel, la température et la durée de la pyrolyse, il est avantageusement possible de contrôler la taille des pores et la structure des aérogels de carbone ainsi obtenus.

Le dopage métallique de ces matériaux carbonés poreux a également été réalisé selon plusieurs modes de réalisation.

Par exemple, une variante de réalisation, notamment décrite dans les documents Carlos Moréno et al Applied Catalysis A :General 183 (1999) 345-356 [réf 1] et Francisco Orenalla-Garcia et al. Applied Catalysis B : Environmental 181 (2016) 94-102 [réf 2] consiste à réaliser la polycondensation de résorcinol et formaldéhyde dans un milieu solvant contenant en outre un sel métallique, précurseur du métal à doper. Les aérogels dopés sont obtenus par carbonisation des hydrogels ainsi formés. Selon un mode de réalisation particulier de cette variante, un dopage en atomes d'azote peut être consécutivement réalisé par pyrolyse de l'hydrogel dans une atmosphère de NH3.

Selon une autre variante, comme celle considérée dans le document A Sarapuu et al. Journal of electroanalytical Chemistry 746 (2015) 9-17 [réf 3] et illustrée en exemple 3 ci-après, il est au préalable préparé un hydrogel de carbone azoté, et celui-ci est ensuite mis en contact avec une solution de nitrates de fer ou de cobalt pour être chargé en l'élément métallique correspondant. L'aérogel dopé est obtenu consécutivement par calcination sous atmosphère azotée. Pour sa part, le document chinois CN109103462 propose de fabriquer dans une première étape, un aérogel par polycondensation de résorcinol et formaldéhyde et de procéder consécutivement et donc également dans une étape supplémentaire, à son dopage métal et azote par mise en contact de l'hydrogel avec un composé de type Co-Phenanthroline à titre de précurseur de l'azote et du cobalt.

Quant au document Donghun Kim et al. ACS Appl. Mater. Interfaces (2018) 10, 25337-25349 [Réf 4], il propose de procéder à la pyrolyse d'un mélange de mélamine, formaldéhyde et de nitrates de métal de transition (Fe, Ni, Co, ou Mn) dans une silice mésoporeuse.

En fait, les voies de synthèse évoquées ci-dessus ne s'avèrent pas totalement satisfaisantes dans la mesure où elles requièrent la mise en œuvre de plusieurs étapes successives pour accéder à un matériau carboné poreux dopé.

Or, pour des raisons évidentes notamment de simplicité de mise en œuvre et de coût, il serait particulièrement intéressant de réaliser en un nombre d'étapes très réduit de tels catalyseurs.

La présente invention a précisément pour objet de proposer un nouveau procédé permettant avantageusement de satisfaire cette attente.

Ainsi, la présente invention vise à proposer un procédé simple, efficace et de bas coût pour la synthèse de catalyseur contenant du carbone, de l'azote et un métal autre que le platine.

Elle vise en outre à proposer un procédé ne nécessitant pas la mise en œuvre d'un matériau de type formeur de pores, sacrificiel.

Elle vise également à proposer un procédé permettant de réaliser en une unique étape le dopage en métal et celui en azote.

Elle vise également à proposer un procédé permettant d'obtenir des catalyseurs pour la réduction de l'oxygène dotés d'une efficacité améliorée.

La présente invention vise également à proposer un nouveau matériau carboné poreux azoté et dopé avantageusement à cœur en espèce(s) métallique(s) catalytique(s).

### Résumé de l'invention

Plus précisément, la présente invention concerne un procédé de préparation d'un matériau carboné poreux, azoté et chargé à cœur par au moins un dopant métallique comprenant au moins les étapes consistant à
(a) disposer d'un milieu solvant contenant en solution, au moins un aldéhyde, un dérivé hydroxybenzène et un composé hydrocarboné source en atomes d'azote et en outre au moins un précurseur métallique dudit dopant métallique,
(b) activer une polymérisation sol-gel au niveau dudit milieu solvant de l'étape (a) pour former un hydrogel de carbone azoté contenant, au moins à cœur, dudit précurseur métallique,
(c) disposer d'une forme sèche dudit hydrogel de carbone azoté formé en étape (b) et,
(d) pyrolyser ladite forme sèche d'hydrogel en atmosphère non oxydante, pour former ledit matériau carboné poreux, azoté et chargé, au moins à cœur, avec au moins un dopant métallique et le récupérer.

Avantageusement, le matériau carboné poreux, azoté et chargé au moins à cœur avec au moins un dopant métallique est un aérogel, cryogel ou xérogel.

Contre toute attente, les inventeurs ont ainsi constaté qu'il est possible de mettre à profit, lors de la synthèse de ce matériau carboné poreux azoté, un précurseur métallique pour, d'une part, assurer le rôle de catalyseur de la réaction de polymérisation sol-gel et, d'autre part, générer le dopant métallique dans la structure poreuse carbone/azote attendue. Le procédé selon l'invention permet ainsi d'obtenir un matériau carboné, poreux, azoté contenant de nombreux micropores chargés en matériau métallique jusqu'au cœur de la structure carboné poreuse et non pas seulement en surface de celle-ci. Un matériau carboné poreux, azoté et chargé selon l'invention a donc pour avantage de posséder plus de sites catalytiques, car également disposés à cœur, et donc d'obtenir ainsi un gain significatif en termes de performance électrochimique.

La présente invention vise en outre un matériau carboné poreux, azoté et chargé au moins à cœur avec au moins un dopant métallique. En particulier il s'agit d'un aérogel, cryogel ou xérogel de carbone azoté et chargé à cœur par au moins un dopant métallique. Avantageusement il peut être obtenu selon le procédé de l'invention.

Selon un autre de ses objets, la présente invention se rapporte à l'utilisation d'un matériau carboné poreux, azoté et chargé au moins à cœur avec au moins un dopant métallique conforme à l'invention, à titre de catalyseur pour la réduction de l'oxygène (ORR).

### Exposé de l'invention

Comme il ressort de ce qui précède, la structure carbone/azote formant le matériau carboné selon l'invention est réalisée par polymérisation sol-gel en présence d'un précurseur du dopant métallique.

Cette réaction de polymérisation sol-gel ou encore de polycondensation est réalisée par mise en présence d'au moins un aldéhyde, un dérivé hydroxybenzène et un composé hydrocarboné source en atomes d'azote dans des conditions propices au déclenchement de la réaction.

L'aldéhyde peut être choisi parmi les aldéhydes à chaine linéaire comme le formaldéhyde, l'éthanal, le propanal, les aldéhydes cycliques comme le furfural, les aldéhydes contenant une ou des fonctions aminées comme la pyrrolidine, l'aminoacétaldéhyde et de préférence est le formaldéhyde.

Le dérivé hydroxybenzène dit encore « hydroxybenzène » désigne au sens de l'invention un composé chimique apte à réagir selon une réaction de polymérisation sol-gel et constitué d'un cycle benzène porteur d'au moins une fonction hydroxyle, de préférence deux fonctions hydroxyles et pouvant être en outre substitué par une fonction carboxylique, amide et/ou un radical alkyle en Ci à C₃. Il est notamment choisi parmi le phénol, le résorcinol, le catéchol, l'acide di-hydroxy-4-méthylbenzoïque, le 2,6-dihydroxybenzamine, l'acide dihydroxybenzoïque et composés dérivés et de préférence est le résorcinol.

Le composé hydrocarboné source en atomes d'azote peut tout particulièrement être choisi parmi les dérivés de la triazine, la phénantroline, la pyridine et la pyrazine et de préférence est la mélamine.

Avantageusement, le dérivé hydroxybenzène et l'aldéhyde sont mis en présence dans un rapport molaire variant de 0,1 à 0,6, de préférence de 0,2 à 0,4.

Avantageusement, le dérivé hydroxybenzène et le composé hydrocarboné source en atome d'azote sont mis en présence dans un rapport molaire variant de 1 à 5 de préférence de 2 à 3.

Selon un mode de réalisation préféré, la polymérisation sol-gel met en présence du formaldéhyde, de la mélamine et du résorcinol.

Ces composés sont formulés dans un solvant apte à les solubiliser, si nécessaire avec chauffage.

Ce solvant est de préférence un milieu aqueux. Il peut notamment être l'eau ou un milieu hydroalcoolique.

La dissolution des aldéhyde, hydroxybenzène et composé hydrocarboné source en atomes d'azote peut notamment être obtenue, par chauffage du milieu solvant les contenant, à une température variant de 60 à 80°C.

Comme requis selon l'invention, la polymérisation sol-gel est initiée et réalisée en présence d'au moins un précurseur de dopant métallique, qui joue avantageusement le rôle de catalyseur à l'égard de cette polymérisation.

Ainsi, avantageusement le procédé selon l'invention ne requiert pas la présence d'un catalyseur de polycondensation distinct de ce précurseur métallique.

Les précurseurs métalliques convenant à l'invention sont de préférence choisis parmi les sels et complexes métalliques des métaux de transition cobalt (Co), titane (Ti), nickel (Ni), zinc (Zn), fer (Fe), manganèse (Mn), et cuivre (Cu).

A titre illustratif, des sels peuvent tout particulièrement être cités les acétates, les nitrates, les chlorures, les ammoniums et les sulfates.

Avantageusement, le précurseur métallique est au moins un sel ou complexe de fer III ou II.

A titre illustratif des structure de fer de type complexe convenant à l'invention, peuvent tout particulièrement être citées les structures de type ferrocène, et les complexes de fer III et fer II, comprenant un ou plusieurs ligands azotés bidentés ou tétradentés à motif notamment pyrridine, phénanthroline, pyrazine, éthylène diamine ou encore 2,4,6-tris(2-pyridyl)-s-triazine (TPTZ).

Le procédé selon l'invention peut être réalisé avec un unique précurseur de dopant métallique ou un mélange de précurseurs métalliques.

La quantité en dopant métallique est ajustée pour obtenir un taux de charge au niveau de l'aérogel suffisant pour conditionner son efficacité à titre de catalyseur pour la réaction de réduction de l'oxygène (ORR).

Avantageusement, le procédé utilise le précurseur métallique dans un rapport de 0,02 à 1 et de préférence de 0,05 à 0,2 exprimé en équivalent métal/ atome(s) d'azote présent(s) dans le composé hydrocarboné source en atome d'azote.

Par exemple dans le cas d'une polycondensation mettant en œuvre 0,2 mole d'aldéhyde pour 0,06 mole d'hydroxybenzène et 0,03 mole de composé hydrocarboné source de 6 atomes d'azote, un nitrate de Fer pourra être utilisé à raison 0,01 mole de nitrate de Fer soit dans un rapport précurseur métallique par atome d'azote de 0,055.

Le précurseur métallique est avantageusement mis en œuvre sous une forme solubilisée.

L'activation en étape (b) peut être réalisée en exposant ledit milieu solvant de l'étape (a) à une température d'environ 85°C. La polymérisation sol-gel est avantageusement réalisée à une température variant de 80°C à 90°C et de préférence de 83 à 87°C.

A l'issue de la polymérisation, il est obtenu un hydrogel carbone/azote au sein duquel sont intégrés en particulier à cœur des atomes métalliques.

Comme énoncé ci-dessus, cet hydrogel est ensuite séché.

Selon le mode de séchage retenu, cet hydrogel est transformé en cryogel, en aérogel ou en xérogel.

Selon une première variante, la forme sèche d'hydrogel de l'étape (c) est dédiée à former un aérogel de carbone azoté chargé à cœur avec au moins une espèce métallique. Cette forme sèche est ainsi formée par séchage de l'hydrogel obtenu en l'étape (b) au contact d'un fluide-supercritique, notamment de l'eau ou du dioxyde de carbone pour le transformer en un aérogel de carbone azoté dopé au moins à cœur avec au moins une espèce métallique.

Selon une seconde variante, la forme sèche d'hydrogel de l'étape (c) est dédiée à former un cryogel de carbone azoté chargé à cœur avec au moins une espèce métallique. Cette forme sèche est obtenue par séparation de l'hydrogel, obtenu en étape (b), de son milieu solvant, congélation du gel ainsi isolé et lyophilisation dudit gel congelé.

Selon une troisième variante, la forme sèche d'hydrogel de l'étape (c) est dédiée à former un xérogel de carbone azoté chargé à cœur avec au moins une espèce métallique. Cette forme sèche est formée par séchage de l'hydrogel obtenu en étape (b) par évaporation du solvant à température et pression contrôlées.

Le cryogel, aérogel ou xérogel ainsi obtenu est ensuite pyrolysé.

Comme énoncé précédemment, selon le procédé de séchage du gel, la température et la durée de la pyrolyse, il est possible de contrôler la taille des pores et la structure des matériaux carbonés poreux, azotés dopés obtenus selon l'invention.

Avantageusement, la pyrolyse est réalisée à une température variant de 750 à 1200°C et notamment d'environ 800°C.

Elle est notamment réalisée sous atmosphère non oxydante en particulier sous azote ou argon.

Cette pyrolyse peut être réalisée en imposant une montée et un refroidissement en température par paliers à l'image par exemple du processus décrit dans les exemples ci-après.

Selon un autre de ses aspects, la présente invention vise des matériaux carbonés, poreux, azotés et chargés à cœur par au moins un dopant métallique et notamment obtenus selon le procédé de l'invention.

Avantageusement, le taux de charge en dopant métallique d'un matériau conforme à l'invention, peut varier de 0,5 à 15% exprimé en masse de métal par rapport à la masse totale dudit matériau.

Ces matériaux carbonés, poreux possèdent en outre un grand volume de pores de taille inférieure à 10nm et de préférence inférieure à 5nm. Ils possèdent avantageusement une surface spécifique appréciée selon la méthode BET supérieure à 350 m^{2/}g de préférence supérieure à 400 m²/g voire supérieure à 550 m²/g.

Ils sont chargés à cœur avec au moins un dopant métallique choisi parmi les métaux de transition cobalt (Co), titane (Ti), nickel (Ni), zinc (Zn), fer (Fe), manganèse (Mn), et cuivre (Cu).

Selon un mode de réalisation particulier, ils sont dopés en atomes de Fer II et/ou Fer III.

Les matériaux carbonés poreux, azotés et chargés à cœur par au moins un dopant métallique conformes à l'invention sont tout particulièrement utiles à titre de catalyseurs pour la réduction de l'oxygène.

Ces matériaux peuvent également être utilisés comme adsorbants, supports de catalyseur avancés et matériaux d'électrode pour supercondensateurs, batteries rechargeables, piles à combustible, etc.

En particulier ils peuvent être utilisés à titre de cathode dans un système de pile à combustible à membrane échangeuse de protons (PEMFC).

### Brève description des dessins

[Fig 1] représente la distribution de la porosité des cryogels conforme et non conformes à l'invention préparés en exemples 1 à 3.
[Fig 2] illustre les performances électrochimiques des cryogels conforme et non conformes à l'invention préparés en exemples 1 à 3.

### Matériels et Méthodes

La distribution des pores est caractérisée selon la méthode d'adsorption de gaz (BET).

### Exemple 1

### Synthèse d'un cryogel conforme à l'invention

1,666 g d'une solution de formaldéhyde à 37% en masse, 0,727 g de Résorcinol et 0,416 g de Mélamine sont ajoutés ensemble dans 52,3 ml d'eau distillée. Le mélange est agité à 70°C jusqu'à complète dissolution des poudres. On ajoute ensuite à la solution 0,646 g de Fe(NO₃)₃ en agitant. On chauffe le bain d'huile à 85°C et on laisse agiter à 700 rpm pendant 60 minutes. L'agitation est ensuite arrêtée et le chauffage prolongé pendant 23 h. Le gel formé est lavé deux fois par l'eau désionisée.

La solution aqueuse de surnageant est éliminée et le bloc de gel est plongé dans l'azote liquide. Quand l'eau du gel est congelée le gel est mis dans un bocal de lyophilisation et est raccordé au lyophilisateur (0,01 mbar avec condensation à -88°C) pendant 5 jours.

Le cryogel organique récupéré est ensuite pyrolysé dans une nacelle en quartz dans un four tubulaire sous flux d'argon (80 NL/h) avec une pente de 3,3 K/min jusqu'à 800°C puis maintien pendant 2h à 800°C avant redescente à température ambiante.

### Exemple 2

### Synthèse d'un cryogel non conforme à l'invention car sans dopage métallique

1,666 g d'une solution de formaldéhyde à 37% en masse, 0,727 g de Résorcinol et 0,416 g de Mélamine et 0,008 g de Na₂CO₃ sont ajoutés ensemble à 52,3 ml d'eau distillée. Le mélange est agité à 70°C jusqu'à complète dissolution des poudres. On chauffe le bain d'huile à 85°C et on laisse agiter à 700 rpm pendant 60 minutes. L'agitation est ensuite arrêtée et on chauffe encore pendant 23 h. Le gel formé est lavé deux fois par l'eau désionisée.

La solution aqueuse de surnageant est éliminée et le bloc de gel est plongé dans l'azote liquide. Quand l'eau du gel est congelée le gel est mis dans un bocal de lyophilisation et est raccordé au lyophilisateur (0,01 mbar avec condensation à -88°C) pendant 5 jours. Le cryogel organique récupéré est ensuite pyrolysé dans une nacelle en quartz dans un four tubulaire sous flux d'argon (80 NL/h) avec une pente de 3,3 K/min jusqu'à 800°C puis maintien pendant 2h à 800°C avant redescente à température ambiante.

### Exemple 3

### Synthèse d'un cryogel chargé selon un procédé non conforme à l'invention (par imprégnation)

Cet exemple a été réalisé selon un procédé apparenté à celui décrit dans la publication de A. Sarapuu et al. Journal of Electroanalytical Chemistry 746 (2015) 9-17 et dans laquelle le dopage métallique est réalisé par imprégnation d'un hydrogel déjà formé.

1,666 g d'une solution de formaldéhyde à 37% en masse, 0,727 g de Résorcinol et 0,416 g de Mélamine et 0,008 g de Na₂CO₃ sont ajoutés ensemble à 52,3 ml d'eau distillée. Le mélange est agité à 70°C jusqu'à complète dissolution des poudres. On chauffe le bain d'huile à 85°C et on laisse agiter à 700 rpm pendant 60 minutes. L'agitation est ensuite arrêtée et on chauffe encore pendant 23 h. Le gel formé est lavé deux fois par l'eau désionisée.

On imprègne ensuite le gel formé dans une solution 0,1M de Fe(NO₃)₃ (nitrate de Fer) en immergeant le gel dans la solution pendant 3 jours.

La solution aqueuse de surnageant est éliminée et le bloc de gel est plongé dans l'azote liquide. Quand l'eau du gel est congelée le gel est mis dans un bocal de lyophilisation et est raccordé au lyophilisateur (0,01 mbar avec condensation à -88°C) pendant 5 jours.

Le cryogel organique récupéré est ensuite pyrolysé dans une nacelle en quartz dans un four tubulaire sous flux d'argon (80 NL/h) avec une pente de 3,3 K/min jusqu'à 800°C puis maintien pendant 2h à 800°C avant redescente à température ambiante.

### Exemple 4

### Caractérisation des cryogels obtenus en exemples 1 à 3.

### a) Caractérisation de leur porosité

La distribution des pores de chacun des cryogels est caractérisée selon la méthode détaillée dans le chapitre matériels et méthodes.

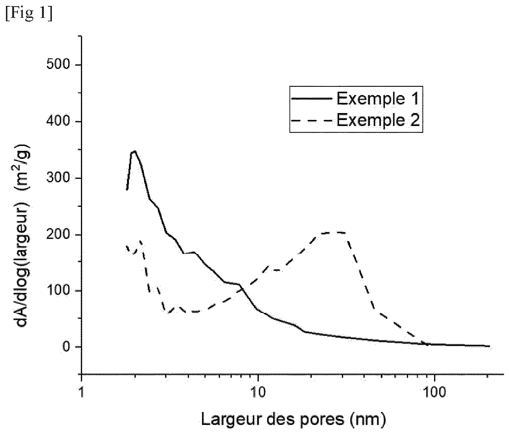

Comme il ressort de la figure 1, le cryogel obtenu en exemple 1 selon l'invention possède une distribution de pores bien différente de celles des cryogels non conformes à l'invention obtenus en exemples 2 et 3. Il possède un grand volume de pores de taille inférieure à 5nm et est donc propice à l'immobilisation d'un plus grand nombre de sites catalytiques.

### b) Evaluation de leurs performances électrochimiques

Les performances électrochimiques des cryogels obtenus en exemples 1, 2 et 3 sont évaluées par dépôt (chargement en catalyseur de 0,7 mg/cm²) sur une électrode tournante en électrolyte acide (H₂SO₄ 0,1M) avec une contre électrode en carbone vitreux et une électrode au sulfate mercureux comme référence ainsi qu'en assemblage membrane électrode avec une anode en Pt/C.

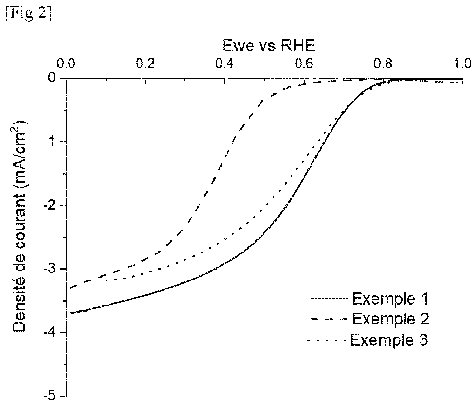

Les résultats obtenus sont représentés en figure 2. Le cryogel obtenu en exemple 1 selon l'invention est plus performant que celui obtenu en exemple 3.

### Liste des documents cités

[réf 1] Carlos Moréno et al Applied Catalysis A: General 183 (1999) 345-356
[réf2] Francisco Orenalla-Garcia et al. Applied Catalysis B : Environmental 181 (2016) 94-102
[réf3] A Sarapuu et al. Journal of electroanalytical Chemistry 746 (2015) 9-17
[réf4] Donghun Kim et al. ACS Appl. Mater. Interfaces (2018) 10, 25337-25349

## Revendications

1. Procédé de préparation d'un matériau carboné poreux, azoté et chargé à cœur par au moins un dopant métallique comprenant au moins les étapes consistant à
(a) disposer d'un milieu solvant contenant en solution, au moins un aldéhyde, un dérivé hydroxybenzène et un composé hydrocarboné source en atomes d'azote et en outre au moins un précurseur métallique dudit dopant métallique,
(b) activer une polymérisation sol-gel au niveau dudit milieu solvant de l'étape (a) pour former un hydrogel de carbone azoté contenant au moins à cœur dudit précurseur métallique,
(c) disposer d'une forme sèche dudit hydrogel de carbone azoté formé en étape (b) et,
(d) pyrolyser ladite forme sèche d'hydrogel en atmosphère non oxydante pour former ledit matériau carboné poreux, azoté et chargé au moins à cœur avec au moins un dopant métallique et le récupérer.

2. Procédé selon la revendication précédente dans lequel ledit matériau carboné poreux, azoté et chargé au moins à cœur avec au moins un dopant métallique est un aérogel, cryogel ou xérogel.

3. Procédé selon la revendication 1 ou 2, dans lequel l'aldéhyde est choisi parmi les aldéhydes à chaine linéaire comme le formaldéhyde, l'éthanal, le propanal, les aldéhydes cycliques comme le furfural, les aldéhydes contenant une ou des fonctions aminées comme la pyrrolidine, l'aminoacétaldéhyde et de préférence est le formaldéhyde ; et/ou
le dérivé hydroxybenzène est choisi parmi le phénol, le résorcinol, le catéchol, l'acide dihydroxy-4-méthylbenzoïque, le 2,6-dihydroxybenzamine, l'acide dihydroxybenzoïque et de préférence est le résorcinol ; et/ou
le composé hydrocarboné source en atomes d'azote est choisi parmi les dérivés de la triazine, la phenantroline, la pyridine et la pyrazine et de préférence est la mélamine.

4. Procédé selon l'une quelconque des revendications précédentes dans lequel le dérivé hydroxybenzène et l'aldéhyde sont mis en présence dans un rapport molaire variant de 0,1 à 0,6, de préférence de 0,2 à 0,4.

5. Procédé selon l'une quelconque des revendications précédentes dans lequel le dérivé hydroxybenzène et le composé hydrocarboné source en atome d'azote sont mis en présence dans un rapport molaire variant de de 1 à 5 de préférence de 2 à 3.

6. Procédé selon l'une quelconque des revendications précédentes dans lequel ladite polymérisation sol-gel met en présence du formaldéhyde, de la mélamine et du résorcinol.

7. Procédé selon l'une quelconque des revendications précédentes dans lequel ledit précurseur métallique est choisi parmi les sels et complexes métalliques des métaux de transition cobalt (Co), titane (Ti), nickel (Ni), zinc (Zn), fer (Fe), manganèse (Mn), et cuivre (Cu), en particulier ledit précurseur métallique est au moins un sel ou complexe de fer II ou III.

8. Procédé selon l'une quelconque des revendications précédentes dans lequel le précurseur métallique est mis en œuvre dans un rapport de 0,02 à 1 et de préférence de 0,05 à 0,2 exprimé en équivalent métal/ atome(s) d'azote présent(s) dans le composé hydrocarboné source en atome d'azote.

9. Procédé selon l'une quelconque des revendications précédentes dans lequel l'activation en étape (b) est réalisée en exposant ledit milieu solvant de l'étape (a) à une température de 85°C.

10. Procédé selon l'une quelconque des revendications précédentes, dans lequel la forme sèche d'hydrogel de l'étape (c) est dédiée à former un aérogel de carbone azoté chargé à cœur avec au moins une espèce métallique et est formée par séchage de l'hydrogel obtenu en l'étape (b), au contact d'un fluide-supercritique ; ou
ladite forme sèche d'hydrogel de l'étape (c) est dédiée à former un cryogel de carbone azoté chargé à cœur avec au moins une espèce métallique et est obtenue par séparation de l'hydrogel obtenu en étape (b) de son milieu solvant, congélation du gel ainsi isolé et lyophilisation dudit gel congelé ; ou
la forme sèche d'hydrogel de l'étape (c) est dédiée à former un xérogel de carbone azoté chargé à cœur avec au moins une espèce métallique et est formée par séchage de l'hydrogel obtenu en étape (b) par évaporation du solvant à température et pression contrôlées.

11. Procédé selon l'une quelconque des revendications précédentes dans lequel la pyrolyse est réalisée à une température variant de 750 à 1200°C et notamment de 800°C.

12. Matériau carboné poreux, azoté et chargé au moins à cœur avec au moins un dopant métallique, ledit matériau étant en particulier un aérogel, cryogel ou xérogel de carbone azoté et chargé à cœur par au moins un dopant métallique.

13. Matériau selon la revendication 12 dont le taux de charge en dopant métallique varie de 0,5 à 15% exprimé en masse de métal-par rapport à la masse totale dudit matériau, ledit dopant métallique étant en particulier choisi parmi les métaux de transition cobalt (Co), titane (Ti), nickel (Ni), zinc (Zn), fer (Fe), manganèse (Mn), et cuivre (Cu) et de préférence dopé en atomes de Fer II et/ou Fer III.

14. Matériau selon la revendication 12 ou 13 possédant une surface spécifique appréciée selon la méthode BET supérieure à 350 m^{2/}g de préférence supérieure à 400 m²/g voire supérieure à 550 m²/g.

15. Matériau selon l'une quelconque des revendications 12 à 14 obtenu selon l'une quelconque des revendications 1 à 11.

16. Utilisation d'un matériau selon l'une quelconque des revendications 12 à 15 à titre de catalyseur pour la réduction de l'oxygène.

17. Utilisation d'un matériau selon l'une quelconque des revendications 12 à 15 à titre de cathode dans un système de pile à combustible à membrane échangeuse de protons (PEMFC).
